# EUROPEAN PATENT SPECIFICATION

(11) **EP 2 031 925 B1**
(45) Date of publication and mention of the grant of the patent: **17.08.2016**
(21) Application number: 08006429.8
(22) Date of filing: 31.03.2008
(51) Int. Cl.: H04W 48/10

(54) **Ad hoc service provider configuration for broadcasting service information**
Ad-hoc-Dienstanbieterkonfiguration zur Ausstrahlung von Dienstinformationen
Configuration d'un fournisseur de service ad hoc pour diffuser des informations de service

(30) Priority: 17.08.2007 US 956658 P; 26.09.2007 US 861280
(43) Date of publication of application: 04.03.2009
(73) Proprietor: Qualcomm Incorporated, San Diego, CA 92121-1714 (US)
(72) Inventor: Krishnaswamy, Dilip, San Diego, CA 92121-1714 (US); Suri, Atul, San Diego, CA 92121-1714 (US)
(74) Representative: Heselberger, Johannes

(56) References cited:
- WO-A-90/13211
- WO-A-02/063900
- DE-A1- 10 208 689
- GB-A- 2 388 276
- US-A1- 2006 178 149

## Description

### Field

The present disclosure relates generally to telecommunications, and more specifically to an ad hoc service provider configuration for broadcasting service information.

### Background

Wireless telecommunication systems are widely deployed to provide various services to consumers, such as telephony, data, video, audio, messaging, broadcasts, etc. These systems continue to evolve as market forces drive wireless telecommunications to new heights. Today, wireless networks are providing broadband Internet access to mobile subscribers over a regional, a nationwide, or even a global region. Such networks are sometimes referred as Wireless Wide Area Networks (WWANs). WWAN operators generally offer wireless access plans to their subscribers such as subscription plans at a monthly fixed rate.

Publication WO-A-02/063900 discloses a first fixed wireless network providing a mobile terminal access to another fixed wireless network. Publication WO-A-90/13211 discloses receiving by a communication unit with multiple transceivers information relating to a plurality of communication systems and establishing a direct communication link with a selected system using the corresponding transceiver.

Accessing WWANs from all mobile devices may not be possible. Some mobile devices may not have a WWAN radio. Other mobile devices with a WWAN radio may not have a subscription plan enabled. Ad hoc networking allows mobile devices to dynamically connect over wireless interfaces using protocols such as WLAN, Bluetooth, UWB or other protocols. There is a need in the art for a methodology to allow a user of a mobile device without WWAN access to dynamically subscribe to wireless access service provided by a user with a WWAN-capable mobile device using wireless ad hoc networking between the mobile devices belong to the two users.

### SUMMARY

The invention relates to a mobile ad hoc service provider device, a related method and a machine-readable medium according to claims 1, 9 and 17. Related embodiments are disclosed in the dependent claims.

It is understood that other embodiments of the present invention will become readily apparent to those skilled in the art from the following detailed description, wherein various embodiments of the invention are shown and described by way of illustration. As will be realized, the invention is capable of other and different embodiments and its several details are capable of modification in various other respects, all without departing from the scope of the present invention. Accordingly, the drawings and detailed description are to be regarded as illustrative in nature and not as restrictive.

### BRIEF DESCRIPTION OF THE DRAWINGS

FIG. 1 is a conceptual block diagram illustrating an example of a telecommunications system.
FIG. 2 is a conceptual block diagram illustrating an example of the functionality of an ad hoc service provider.
FIG. 3 is a conceptual block diagram illustrating an example of a hardware configuration for an ad hoc service provider.
FIG. 4 is a flowchart illustrating an example of a method for providing service information from an ad hoc service provider.
FIG. 5 is a conceptual block diagram of an exemplary configuration of an ad hoc service provider.

### DETAILED DESCRIPTION

The detailed description set forth below in connection with the appended drawings is intended as a description of various configurations of the present invention and is not intended to represent the only configurations in which the present invention may be practiced. The detailed description includes specific details for the purpose of providing a thorough understanding of the present invention. However, it will be apparent to those skilled in the art that the present invention may be practiced without these specific details. In some instances, well-known structures and components are shown in block diagram form in order to avoid obscuring the concepts of the present invention.

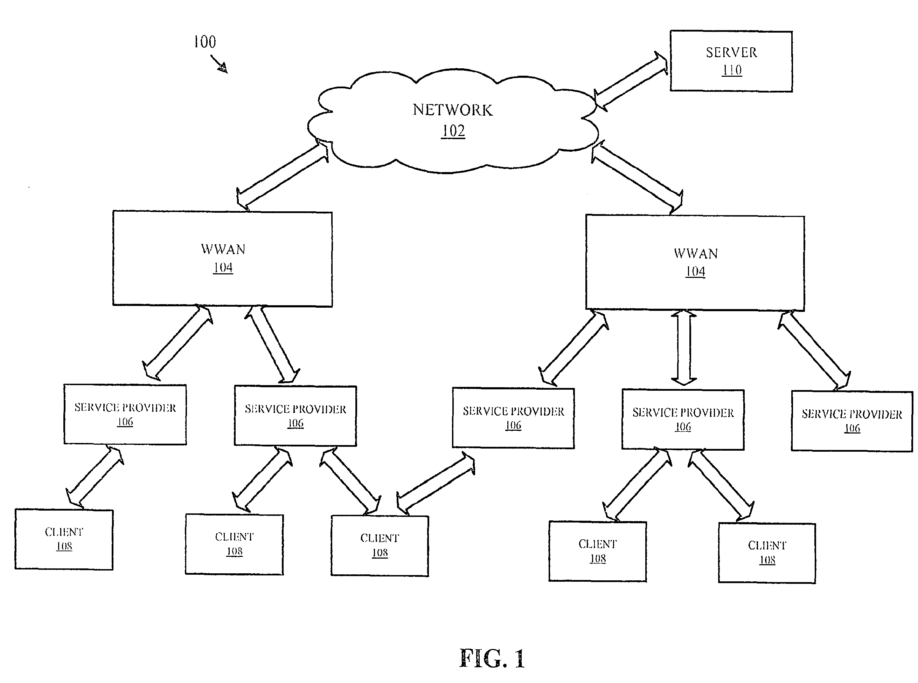

FIG. 1 is a conceptual block diagram illustrating an example of a telecommunications system. The telecommunications system 100 is shown with multiple WWANs 104 that provide broadband access to a network 102 for mobile subscribers. The network 102 may be a packet-based network such as the Internet or some other suitable network. For clarity of presentation, two WWANs 104 are shown with a backhaul connection to the network 102. However, the number of WWANs providing broadband access to network 102 is not limited to two WWANs. Each WWAN 104 may be implemented with multiple fixed-site base stations (not shown) dispersed throughout a geographic region. The geographic region may be generally subdivided into smaller regions known as cells. Each base station may be configured to serve all mobile subscribers within its respective cell. A base station controller (not shown) may be used to manage and coordinate the base stations in the WWAN 104 and support the backhaul connection to the network 102.

Each WWAN 104 may use one of many different wireless access protocols to support radio communications with mobile subscribers. By way of example, one WWAN 104 may support Evolution-Data Optimized (EV-DO), while the other WWAN 104 may support Ultra Mobile Broadband (UMB). EV-DO and UMB are air interface standards promulgated by the 3rd Generation Partnership Project 2 (3GPP2) as part of the CDMA2000 family of standards and employ multiple access techniques such as Code Division Multiple Access (CDMA) to provide broadband Internet access to mobile subscribers. Alternatively, one of the WWANs 104 may support Long Term Evolution (LTE), which is a project within the 3GPP2 to improve the Universal Mobile Telecommunications System (UMTS) mobile phone standard based primarily on a Wideband CDMA (W-CDMA) air interface. One of the WWANs 104 may also support the WiMAX standard being developed by the WiMAX forum. The actual wireless access protocol employed by a WWAN for any particular telecommunications system will depend on the specific application and the overall design constraints imposed on the system. The various techniques presented throughout this disclosure are equally applicable to any combination of heterogeneous or homogeneous WWANs regardless of the wireless access protocols utilized.

Each WWAN 104 has a number of mobile subscribers. Each subscriber may have a mobile node capable of accessing the network 102 directly through the WWAN 104. The mobile nodes access the WWAN 104 shown in the telecommunications system in FIG. 1 using an EV-DO, UMB or LTE wireless access protocol; however, in actual implementations, these mobile nodes may be configured to support any wireless access protocol.

One or more of the mobile nodes may be configured to create in its vicinity an ad hoc network based on the same or a different wireless access protocol used to access the WWAN 104. By way of example, a mobile node may support a UMB wireless access protocol with a WWAN, while providing an IEEE 802.11 access point for other mobile nodes that cannot directly access a WWAN. IEEE 802.11 denotes a set of Wireless Local Access Network (WLAN) standards developed by the IEEE 802.11 committee for short-range communications (e.g., tens of meters to a few hundred meters). Although IEEE 802.11 is a common WLAN wireless access protocol, other suitable protocols may be used.

A mobile node that may be used to provide an access point for another mobile node will be referred to herein as a "ad hoc service provider" and is represented in FIG. 1 as a service provider 106. A mobile node that may use an access point of an ad hoc service provider 106 will be referred to herein as a "mobile client" and is represented in FIG. 1 as a client 108. A mobile node, whether an ad hoc service provider 106 or a client 108, may be a laptop computer, a mobile telephone, a personal digital assistant (PDA), a mobile digital audio player, a mobile game console, a digital camera, a digital camcorder, a mobile audio device, a mobile video device, a mobile multimedia device, or any other device capable of supporting at least one wireless access protocol.

The ad hoc service provider 106 may extend its wireless broadband network access service to mobile clients 108 that would otherwise not have access to the network 102. A server 110 may be used as an "exchange" to enable mobile clients 108 to purchase unused bandwidth from ad hoc service providers 106 to access, for example, the network 102 across WWANs 104.

An ad hoc service provider 106, a server 110, and one or more mobile clients 108 may establish a network that is an ad hoc heterogeneous wireless network. By way of example, a heterogeneous wireless network may include at least two types of wireless networks (e.g., a WWAN and a WLAN). By way of example, an ad hoc network may be a network whose specific configuration may change from time to time or from the formation of one network to the next. The network configuration is not pre-planned prior to establishing the network. Examples of configurations for an ad hoc network may include a configuration as to which members are to be in the network (e.g., which ad hoc service provider, which server, and/or which mobile client(s) are to be included in a network), a configuration as to the geographic locations of an ad hoc service provider and mobile client(s), and a configuration as to when and how long a network is to be established.

For illustrative purposes only, exemplary scenarios of ad hoc networks are described below. Scenario 1: While a mobile subscriber is at an airport on Tuesday 8 am, he may turn on his mobile node (e.g., a laptop computer or a mobile telephone), use it as an ad hoc service provider while he is waiting for his flight, and establish an ad hoc network for thirty minutes. The ad hoc network may include one or more mobile clients (e.g., other laptop computers or mobile telephones) in the vicinity. Scenario 2: On Wednesday 5 pm, while the mobile subscriber is at a hotel, he may use the same mobile node as an ad hoc service provider to form another ad hoc network for four hours, providing its service to the same mobile clients, different mobile clients, or a combination of both. Scenario 3: On Wednesday 5 pm, a different ad hoc service provider may form an ad hoc network at the airport where the first ad hoc service provider was the day before. Because the service providers and clients are mobile, an ad hoc network can be a "mobile" network.

The server 110 may be a centralized server or a distributed server. The centralized server may be a dedicated server or integrated into another entity such as a desktop or laptop computer, or a mainframe. The distributed server may be distributed across multiple servers and/or one or more other entities such as laptop or desktop computers, or mainframes. In at least one configuration, the server 110 may be integrated, either in whole or in part, into one or more ad hoc service providers.

In one configuration of a telecommunications system 100, the server 110 charges the mobile clients 108 based on usage. For the occasional user of mobile Internet services, this may be an attractive alternative to the monthly fixed rate wireless access plans. The revenue generated from the usage charges may be allocated to the various entities in the telecommunications system 100 in a way that tends to perpetuate the vitality of the exchange. By way of example, a portion of the revenue may be distributed to the ad hoc service providers, thus providing a financial incentive for mobile subscribers to become ad hoc service providers. Another portion of the revenue may be distributed to the WWAN operators to compensate them for the bandwidth that would otherwise go unutilized. Another portion of the revenue may be distributed to the manufacturers of the mobile nodes. The remainder of the revenue could be kept by the server operator that provides the exchange. The server 110, which may be a centralized server as shown or a distributed server including multiple servers, may be used to determine how to allocate revenue generated from the mobile clients 108 to the various entities in the telecommunications system 100.

The server 110 may be implemented as a trusted server. It can therefore be authenticated, for example, using a Public Key Infrastructure (PKI) certificate in a Transport Layer Security (TLS) session between the server 110 and an ad hoc service provider 106, or between the server 110 and a mobile client 108. Alternatively, the server 110 may be authenticated using self-signed certificates or by some other suitable means.

Regardless of the manner in which the server 110 is authenticated, a secure session channel may be established between the server 110 and an ad hoc service provider 106, or between the server 110 and a mobile client 108, during registration. In one configuration of a telecommunications system 100, a mobile client 108 may register with the server 110 to set up a user name and password with payment information. An ad hoc service provider 106 may register with the server 110 to notify its desire to provide a wireless access point to the network 102 (e.g., an Internet access point) to mobile clients 108.

The server 110 may also be used to provide admission control. Admission control is the process whereby the server 110 determines whether to allow an ad hoc service provider 106 to provide service within a geographic location. The server 110 may limit the number of ad hoc service providers 106 at a given location if it determines that additional ad hoc service providers 106 will adversely affect performance in the WWAN. Additional constraints may be imposed by the WWAN operators that may not want its mobile subscribers to provide service in a given geographic location depending on various network constraints.

The server 110 may also be used to manage dynamic sessions that are established between the ad hoc service providers 106 and the mobile clients 108. In one configuration of the telecommunications system 100, Extensible Authentication Protocol-Tunneled Transport Layer Security (EAP-TTLS) may be used for Authentication, Authorization and Accounting (AAA) and secure session establishment for a connection initiated by an ad hoc service provider 106 with the server 110 when the ad hoc service provider 106 is mobile and desires to provide service. EAP-TTLS may also be used for a session initiation request by a mobile client 108. In the latter case, the mobile client 108 is the supplicant, the ad hoc service provider 106 is the authenticator, and the server 110 is the authentication server. The ad hoc service provider 106 sends the mobile client's credentials to the server 110 for EAP-AAA authentication. The EAP-TTLS authentication response from the server 110 is then used to generate a Master shared key. Subsequently, a link encryption key may be established between the ad hoc service provider 106 and the mobile client 108.

Additional security may be achieved with a Secure Sockets Layer Virtual Private Network (SSL VPN) tunnel between a mobile client 108 and the server 110. The SSL VPN tunnel is used to encrypt traffic routed through an ad hoc service provider 106 to provide increased privacy for a mobile client 108. Alternatively, the tunnel may be an IPsec tunnel or may be implemented using some other suitable tunneling protocol.

Once the tunnel is established between the server 110 and the mobile client 108, various services may be provided. By way of example, the server 110 may support audio or video services to the mobile client 108. The server 110 may also support advertising services to the mobile client 108. Other functions of the server 110 include providing routing to and from the network for mobile client 108 content as well as providing network address translation to and from the network for mobile client 108.

The server 110 may also provide support for a handoff of a mobile client 108 from one ad hoc service provider 106 to another based on any number of factors. These factors may include, by way of example, the quality of service (QoS) required by each mobile client 108, the duration of the session required by each mobile client 108, and the loading, link conditions, and energy level (e.g., battery life) at the ad hoc service provider 106.

The server 110 also may be used to store a goodness metric for each ad hoc service provider 106. The goodness metric reflects the level of service an ad hoc service provider 106 has provided during previous access sessions with mobile clients 108. The server 110 may monitor each session between an ad hoc service provider 106 and a mobile client 108 and update the goodness metric associated with the ad hoc service provider 106 based on one or more factors. The factors may include, but are not limited to, the duration of the access session and the average bandwidth of access to the WWAN 104 provided to the mobile client 108. Monitored factors may be assigned a value from a range of values for each session. The goodness metric for the session may be the sum or average of these values. As an ad hoc service provider 108 provides more access sessions to mobile clients 108, the goodness metric associated with the ad hoc service provider may be continually updated by averaging the goodness metrics from prior access sessions. This average may be a straight average or it may be weighted to favor more recent access sessions.

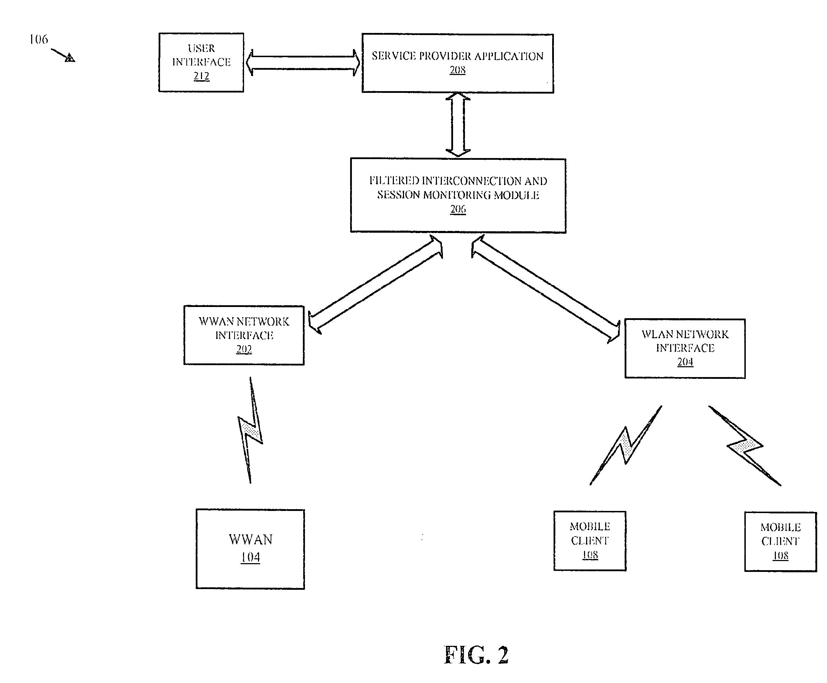

FIG. 2 is a conceptual block diagram illustrating an example of the functionality of an ad hoc service provider 106. The ad hoc service provider 106 has the ability to bridge wireless links over homogeneous or heterogeneous wireless access protocols. This may be achieved with a WWAN network interface 202 that supports a wireless access protocol for a WWAN to the network 102, and a WLAN network interface 204 that provides a wireless access point for mobile clients 108. By way of example, the WWAN network interface 202 may include a transceiver function that supports EV-DO for Internet access through a WWAN 104, and the WLAN network interface 204 may include a transceiver function that provides an 802.11 access point for mobile clients 108. Each network interface 202, 204 may be configured to implement the physical layer by demodulating wireless signals and performing other radio frequency (RF) front end processing. Each network interface 202, 204 may also be configured to implement the data link layer by managing the transfer of data across the physical layer.

The ad hoc service provider 106 is shown with a filtered interconnection and session monitoring module 206. The module 206 provides filtered processing of content from mobile clients 108 so that the interconnection between the ad hoc wireless link and the WWAN network interface 202 is provided only to mobile clients 108 authenticated by the server. The module 206 is also responsible for monitoring the sessions between the server and the authenticated mobile clients 108. The module 206 also maintains tunneled connectivity between the server and the authenticated mobile clients 108.

The ad hoc service provider 106 also includes a service provider application 208 that (1) enables the module 206 to provide ad hoc services to mobile clients 108, and (2) supports WWAN or Internet access to a mobile subscriber or user of the ad hoc service provider 106. The latter function is supported by a user interface 212 that communicates with the WWAN network interface 202 through the module 206 under control of the service provider application 208. The user interface 212 may include a keypad, display, speaker, microphone, joystick, and/or any other combination user interface devices that enable a mobile subscriber or user to access the WWAN 104 or the network 102 (see FIG. 1).

As discussed above, the service provider application 208 also enables the module 206 to provide ad hoc services to mobile clients 108. The service provider application 208 maintains a session with the server 110 to exchange custom messages with the server. In addition, the service provider application 208 also maintains a separate session with each mobile client 108 for exchanging custom messages between the service provider application 208 and the mobile client 108. The service provider application 208 provides information on authenticated and permitted clients to the filtered interconnection and session monitoring module 206.

The filtered interconnection and session monitoring module 206 allows content flow for only authenticated and permitted mobile clients 108. The filtered interconnection and session monitoring module 206 also optionally monitors information regarding content flow related to mobile clients 108 such as the amount of content outbound from the mobile clients and inbound to the mobile clients, and regarding WWAN and WLAN network resource utilization and available bandwidths on the wireless channels. The filtered interconnection and session monitoring module 206 can additionally and optionally provide such information to the service provider application 208. The service provider application 208 can optionally act on such information and take appropriate actions such as determining whether to continue maintaining connectivity with the mobile clients 108 and with the server, or whether to continue to provide service. It should be noted that the functions described in connection with module 206 and service provider application 208 can be implemented in any given platform in one or multiple sets of modules that coordinate to provide such functionality at the ad hoc service provider 106.

When the ad hoc service provider 106 decides to provide the ad hoc services, the service provider application 208 sends a request to the server 110 for approval. The service provider application 208 requests authentication by the server 110 and approval from the server 110 to provide service to one or more mobile clients 108. The server 110 may authenticate the ad hoc service provider 106 and then determine whether it will grant the ad hoc service provider's request. As discussed earlier, the request may be denied if the number of ad hoc service providers in the same geographic location is too great or if the WWAN operator has imposed certain constraints on the ad hoc service provider 106.

Once the ad hoc service provider 106 is authenticated, the service provider application 208 may advertise service information for the ad hoc service provider. The service provider application 208 may also prompt changes to the advertised service information as conditions change. Interested mobile clients 108 may associate with an Service Set Identifier (SSID) to access the ad hoc service provider 106. The service provider application 208 may then route authentication messages between the mobile clients 108 with the server 110 and configure the filtered interconnection and session monitoring module 206 to connect the mobile clients 108 to the server once authenticated. During the authentication of a mobile client 108, the service provider application 208 may use an unsecured wireless link.

The service provider application 208 may manage the mobile client 108 generally, and the session specifically, through the user interface 212. Alternatively, the service provider application 208 may support a seamless operation mode with processing resources being dedicated to servicing mobile clients 108. In this way, the mobile client 108 is managed in a way that is transparent to the mobile subscriber. The seamless operation mode may be desired where the mobile subscriber does not want to be managing mobile clients 108, but would like to continue generating revenue by sharing bandwidth with mobile clients 108.

Although not shown, the ad hoc service provider 106 may also include a server application. The server application may be used to enable the ad hoc service provider 106 to function as a server to authenticate mobile clients 108.

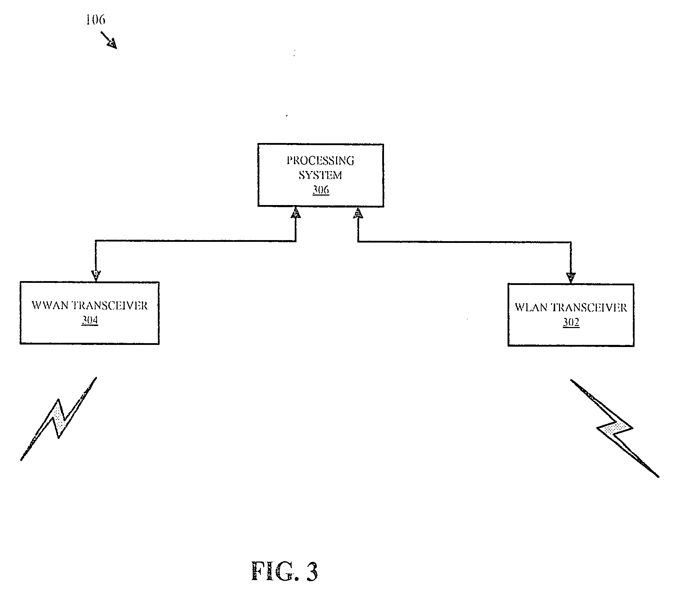

FIG. 3 is a conceptual block diagram illustrating an example of a hardware configuration for an ad hoc service provider. The ad hoc service provider 106 is shown with a WLAN transceiver 302, a WWAN transceiver 304, and a processing system 306. By way of example, the WLAN transceiver 302 may be used to implement the analog portion of the physical layer for the WLAN network interface 202 (see FIG. 2), and the WWAN transceiver 304 may be used to implement the analog portion of the physical layer for the WWAN network interface 204 (see FIG. 2).

The processing system 306 may be used to implement the digital processing portion of the physical layer, as well as the link layer, for both the WLAN and the WWAN network adaptors 202 and 204 (see FIG. 2). The processing system 306 may also be used to implement the filtered interconnection and session monitoring module 206 and the service provider application 208 (see FIG. 2).

The processing system 306 may be implemented using software, hardware, or a combination of both. By way of example, the processing system 306 may be implemented with one or more processors. A processor may be a general-purpose microprocessor, a microcontroller, a Digital Signal Processor (DSP), an Application Specific Integrated Circuit (ASIC), a Field Programmable Gate Array (FPGA), a Programmable Logic Device (PLD), a controller, a state machine, gated logic, discrete hardware components, or any other suitable entity that can perform calculations or other manipulations of information. The processing system 306 may also include one or more machine-readable media for storing software. Software shall be construed broadly to mean instructions, data, or any combination thereof, whether referred to as software, firmware, middleware, microcode, hardware description language, or otherwise. Instructions may include code (e.g., in source code format, binary code format, executable code format, or any other suitable format of code).

Machine-readable media may include storage integrated into a processor, such as might be the case with an ASIC. Machine-readable media may also include storage external to a processor, such as a Random Access Memory (RAM), a flash memory, a Read Only Memory (ROM), a Programmable Read-Only Memory (PROM), an Erasable PROM (EPROM), registers, a hard disk, a removable disk, a CD-ROM, a DVD, or any other suitable storage device. In addition, machine-readable media may include a transmission line or a carrier wave that encodes a data signal. Those skilled in the art will recognize how best to implement the described functionality for the processing system 306.

The functionality of the processing system 306 for one configuration of an ad hoc service provider 106 will now be presented with reference to FIG. 1. Those skilled in the art will readily appreciate that other configurations of the ad hoc service provider 106 may include a processing system 306 that has the same or different functionality.

Turning to FIG. 1, the processing system in the ad hoc service provider 106 provides a means for enabling access by one or more mobile clients 108 to a first wireless network, represented by a WWAN 104, via a second wireless network, represented by a WLAN comprising the one or more mobile clients 108 and the ad hoc service provider functioning as a wireless access point to the WLAN. The processing system may enable this access by implementing the filtered interconnection and session monitoring module 206 and the service provider application 208, as represented in FIG. 2 to bridge the wireless links associated with the WWAN 104 and the WLAN having different wireless access protocols (e.g., EV-DO and 802.11).

The processing system in the ad hoc service provider 106 may function to establish the wireless access point when authorized by the server 110. When the processing system decides to establish a wireless access point for one or more mobile clients 108, it sends a request to the server 110 for approval. The processing system requests authentication by the server 110 and approval from the server 110 to provide service to one or more mobile clients 108. The server 110 may authenticate the ad hoc service provider 106 and then determine whether it will grant the ad hoc service provider's request. As discussed earlier, the request may be denied if the number of ad hoc service providers in the same geographic location is too great or if the WWAN operator has imposed certain constraints on the ad hoc service provider 106.

Once the ad hoc service provider 106 is authenticated and approved to provide service to one or more mobile clients 108, the ad hoc service provider 106 may advertise its availability to provide access to the WWAN 104 by assembling and broadcasting service information to mobile clients 108 within range of its WLAN transceiver 302. The service information may include parameters for accessing the WLAN established with the ad hoc service provider 106 as a wireless access point as well as attributes of the access to the WWAN 104 offered by the ad hoc service provider 106. The parameters of access to the WLAN may include an ad hoc Service Set Identifier (SSID), supported data rates, data security mechanisms, as well as other parameters used by the mobile client 108 to associate and establish a wireless link with the ad hoc service provider. The SSID may be set to include characters identifying the ad hoc service provider 106 as a mobile node offering access to a WWAN 104.

The attributes of access to the WWAN 104 offered by the ad hoc service provider 106 may include information to enable a mobile client 108 to determine whether the ad hoc service provider 106 is providing sufficient access to the WWAN 104 to meet the needs of the mobile client 108 and to select the ad hoc service provider 106 if acceptable to the mobile client 108. The attributes of access may include the previously discussed goodness metric associated with the ad hoc service provider 106, fee rates of access to the WWAN 104, and/or one or more quality of service parameters. The quality of service parameters include, but are not limited to, an expected data rate of access to the WWAN 104, an expected duration of access to the WWAN 104, a latency of access to the WWAN 104, a frequency of access to the WWAN 104, and an amount of transferred data with respect to the WWAN 104.

The expected duration of access to the WWAN 104 is a user-specified period of time reflecting an amount of time a mobile subscriber anticipates making an ad hoc service provider 106 available at a particular geographic location such as an airport terminal, hotel lobby, sports venue, etc. The expected duration of access may be communicated to the server 110 when the ad hoc service provider 106 is authenticated and approved by the server 110 to provide access to the WWAN 104.

The expected data rate of access to the WWAN 104 via the wireless link between the ad hoc service provider 106 and the WWAN 104 may vary depending on the wireless access protocol used within the WWAN 104, the signal strength of the wireless link between the ad hoc service provider 106 and the WWAN 104, and the amount of concurrent data traffic within the WWAN 104. The ad hoc service provider 106 may be configured to monitor the average data rate of access to the WWAN 104 available to the ad hoc service provider 106. Based on this average data rate, an expected average data rate of access to the WWAN 104 available to a mobile client 108 through the ad hoc service provider 106 is determined.

The expected average data rate of access to the WWAN 104 may be set as a percentage of the total available data rate available to the ad hoc service provider 106 or it may be set to a user-specified amount by the mobile subscriber offering access through the ad hoc service provider 106. In an alternative configuration, the server 110 may set the expected average data rate when the ad hoc service provider 106 is authenticated and approved to provide service. The server 110 may set the expected average data rate using information received from the ad hoc service provider 106 when approval was requested and based on an agreement reached with the mobile subscriber regarding the level of service to be provided.

Both the expected duration of access and the expected data rate of access to the WWAN 104 are dynamic attributes. For example, the expected duration of access to the WWAN 104 may be set when the ad hoc service provider 106 is authenticated and approved to provide service with the server 110. The expected duration will decrease to reflect the amount of time the ad hoc service provider 106 has been available to provide access to a mobile client 108 since the ad hoc service provider 106 was authenticated and approved by the server 110. Optionally, the mobile subscriber may update the amount of time the mobile service subscriber 106 will be available to provide access. The mobile service subscriber 106 may be required to re-authenticate and request approval from the server 110 to continue providing service once the initially set period to time expires.

The expected data rate of access to the WWAN 104 also may change while the ad hoc service provider 106 is available to provide access. For example, the overall data rate available to the ad hoc service provider 106 may vary due to changes in traffic on the WWAN 104. Similarly, the expected data rate of access may be partially utilized by a first mobile client 108 when subsequent mobile clients 108 seek access to the WWAN 104. The expected data rate of access to the WWAN 104 may be modified to take these changes into account.

The latency and frequency of access to the WWAN 104 refer to operating details of the access offered by the ad hoc service provider to the mobile client. For example, the latency and frequency of access may refer to the latency of packet access, the frequency of packet transmission, the duration of packet transmission, the packet length, etc. available to the mobile client during a given session. Varying these parameters varies the priority associated with associated access sessions available to mobile clients. Accordingly, a mobile client may select access offered by an ad hoc service provider that provides access priority to the WWAN 104 suitable for the applications being used by the mobile client.

The amount of transferred data refers to an amount of data transmitted and/or received by a mobile client when accessing the WWAN 104 during an access session. The amount of transferred data may indicate the maximum amount of data that a mobile client is permitted to receive and/or transmit via WWAN 104 in a single access session. The amount of transferred data may refer to bytes per session or bytes per a specified period of time.

The fee rate of access to the WWAN 104 is the cost per unit time incurred by a mobile client 108 when accessing the WWAN 104 via a WLAN established by the ad hoc service provider 106. The fee rate may include a range of fee rates covering different periods of time. The fee rate also may include a range of fees associated with different combinations of quality of service parameters discussed above. The fee rate for access to the WWAN 104 may be provided by the server 110 to the ad hoc service provider 106 at the time of authentication and approval for providing access to the WWAN 104. Alternatively, the mobile subscriber may set or adjust the fee rate independent of the server 110.

The processing system 306 may be used to provide means for receiving one or more of the foregoing attributes of access to the WWAN 104 from the server 110. The processing system 306 may execute code to request and/or receive attributes from the server 110. These attributes may include the goodness metric associated with the ad hoc service provider 106 and a fee rate of access to the WWAN 104. The code may be implemented in a standalone application or it may be part of a larger application incorporating other functionality. For example, the code may be executed within the processing system when an ad hoc service provider 106 is authenticated and approved by the server 110 to provide access to the WWAN 104.

The processing system 306 may be used to provide means for dynamically updating one or more attributes of access to the WWAN 104 offered by the ad hoc service provider 106 based on the status of the ad hoc service provider 106. The processing system 306 may execute code to monitor factors affecting one or more attributes and to adjust the attributes based on monitored changes in the factors. As discussed above, such attributes may include the expected duration of access and the expected data rate of access to the WWAN 104. The code may be implemented in a standalone application or it may be part of a larger application incorporating other functionality. For example, the code may be executed within the processing system 306 continuously while the ad hoc service provider 106 is made available to offer access to the WWAN 104.

The processing system 306 in the ad hoc service provider 106 may be configured to provide a means for assembling the service information discussed above for broadcasting to one or more mobile clients 108. The parameters and attributes mentioned above may be stored within the processing system 306. The processing system 306 may execute code to retrieve each of the parameters and attributes and assemble them into a format suitable for broadcasting to one or more mobile clients 108 using the WLAN transceiver 302. For example, a driver for the WLAN network interface 204 may be modified to assemble the parameters and attributes into a beacon frame that is subsequently transmitted using WLAN transceiver 302.

Beacon frames are a common feature in wireless access protocols to notify mobile nodes within a specified range of the availability of a wireless network access point. A beacon frame may include fields whose contents are dictated by the wireless access protocol as well as fields that are vender-specific or user-specific to allow for custom applications. The parameters of access to the WLAN may be automatically incorporated into fields of the beacon frame specified by the wireless access protocol used within the WLAN. The processing system 306 may be configured to incorporate one or more of the attributes of access to the WWAN 104 into the user-specified fields.

The processing system 306 also may be configured to incorporate one or more attributes of access to the WWAN 104 into a parameter of access to the WLAN. For example, the SSID of the WLAN may not use all of the available bytes of the beacon frame. The processing system 306 may be configured to incorporate one or more attributes of access to the WWAN 104 into the SSID of the WLAN. The number of attributes that may be incorporated into the SSID will vary depending on the data size of the SSID and the data size of the attributes.

Once construction of the beacon frame is complete, WLAN transceiver 302 broadcasts the beacon frame to mobile clients 108 within range of the transceiver.

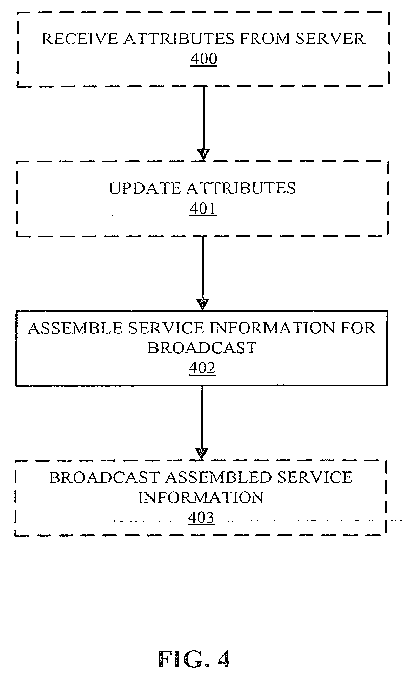

FIG. 4 is a flowchart illustrating an example of a method for providing service information from an ad hoc service provider 106 to enable access to a WWAN 104. For implementations in which attributes are received from server 110, the processing system 306 of the ad hoc service provider 106 receives such attributes in step 400. For implementations in which attributes are updated dynamically based on the status of the ad hoc service provider 106, the processing system 306 of the ad hoc service provider 106 updates the attributes in step 401. In step 402, the processing system 306 assembles the service information, which includes both parameters of access to the WLAN and attributes of access to the WWAN 104, into a format suitable for broadcasting to one or more mobile clients 108. In step 403, the assembled service information is broadcast to the mobile clients 108 using the WLAN transceiver 302.

Upon receiving the service information broadcast by the ad hoc service provider 106, the mobile clients 108 may be configured to parse the assembled service information to identify the various parameters of access to the WLAN and the attributes of access to the WWAN 104. The parameters and attributes may be displayed within a graphical user interface on the mobile client 108 to allow a mobile user to view the attributes of access to the WWAN 104 being offered by the ad hoc service provider. Based on the broadcast attributes, a mobile user can determine whether or not the offered access to the WWAN 104 is sufficient for the mobile user's desired applications. For example, the mobile user may require access for a minimum period of time or intend on using a data-intensive application requiring a high data rate. Furthermore, the mobile user can gain information on the reliability of the particular ad hoc service provider 106 based on the associated goodness metric. Additionally, if multiple ad hoc service providers 106 are within range of the mobile client 108, the mobile client may be configured to display the attributes of all available ad hoc service providers 106 thereby allowing the mobile user to compare the different ad hoc service providers and select one that best suits their needs.

Mobile clients 108 interested in the access offered by an ad hoc service provider 106 may associate with the broadcast SSID to access the ad hoc service provider 106. The processing system in the ad hoc service provider 106 may then authenticate the mobile clients 108 with the server 110 and then set up an interconnection bridge from the WLAN link to the mobile clients 108 over to the WWAN link. During the authentication of a mobile client 108, the processing system in the ad hoc service provider 106 may use an unsecured wireless link.

The processing system in the ad hoc service provider 106 may optionally choose to move a mobile client 108 to a new SSID with a secure link once the mobile client 108 is authenticated. In such situations, the ad hoc service provider 106 may distribute the time it spends in each SSID depending on the load that it has to support for existing sessions with mobile clients 108.

The processing system may also determine whether the ad hoc service provider 106 can support a mobile client 108 before allowing the mobile client 108 to access a network. Resource intelligence in the processing system that estimates the drain on the battery power and other processing resources that would occur by accepting a mobile client 108 may assist in determining whether the processing system should consider supporting a new mobile client 108 or accepting a handoff of that mobile client 108 from another ad hoc service provider 106.

The processing system in the ad hoc service provider 106 may admit mobile clients 108 and provides them with a certain QoS guarantee, such as an expected average bandwidth during a session. Average throughputs provided to each mobile client 108 over a time window may be monitored. The ad hoc service provider 106 may monitor the throughputs for all flows going through it to ensure that resource utilization by the mobile clients 108 is below a certain threshold, and that it is meeting the QoS requirement that it has agreed to provide to the mobile clients 108 during the establishment of the session.

The processing system in the ad hoc service provider 106 may also provide a certain level of security to the wireless access point by routing data between the mobile client 108 and the server without being able to decipher the data. Similarly, the processing system may be configured to ensure data routed between the user interface and the WWAN cannot be deciphered by mobile clients. The processing system may use any suitable encryption technology to implement this functionality.

The processing system in the ad hoc service provider 106 may also maintain a time period for a mobile client 108 to access a network. The time period may be agreed upon between the ad hoc service provider 106 and the mobile client 108 during the initiation of the session. If the processing system determines that it is unable to provide the mobile client 108 with access to the network for the agreed upon time period, then it may notify both the server 110 and the mobile client 108 regarding its unavailability. This may occur due to energy constraints (e.g., a low battery), or other unforeseen events. The server 110 may then consider a handoff of the mobile client to another ad hoc service provider 106, if there is such an ad hoc service provider 106 in the vicinity of the mobile client 108. The processing system in the ad hoc service provider 106 may support the handoff of the mobile client 108.

Turning now to the mobile client 108, a TLS session may be used by the mobile client 108 to register with the server 110. Once registered, the mobile client 108 may search for available ad hoc service providers 106. When the mobile client 108 detects the presence of one or more ad hoc service providers 106, it may initiate a session using EAP-TTLS with an ad hoc service provider 106 based on attributes and parameters such as the available bandwidth that the ad hoc service provider 106 can support, the goodness metric of the ad hoc service provider 106, and the cost of the service advertised. As described earlier, a link encryption key may be established between the mobile client 108 and the ad hoc service provider 106 during the establishment of the session. An SSL VPN session may be established between the mobile client 108 and the server 110 so that all traffic between the two is encrypted. The transport layer ports may be kept in the open and not encrypted to provide visibility for the network address translation functionality at the ad hoc service provider 106.

A handoff of a mobile client 108 from one ad hoc service provider to another may occur due to any of a number of factors. The handoff of the mobile client 108 may be performed in a variety of ways. In one configuration, the mobile client 108 may maintain a limited session with multiple ad hoc service providers 106, while using one ad hoc service provider 106 to access the Internet. As described earlier, this approach may facilitate the handoff process. In an alternative configuration, the mobile client 108 may consider a handoff only when necessary. In this configuration, the mobile client 108 may maintain an active list of ad hoc service providers 106 in its vicinity for handoff. The mobile client 108 may select an ad hoc service provider 106 for handoff from the active list when the current ad hoc service provider 106 needs to discontinue its service. When handoff is not possible, a mobile client 108 may need to reconnect through a different ad hoc service provider 106 to access the Internet.

If the bandwidth needs of a mobile client 108 are greater than the capabilities of the available ad hoc service providers 106, then the mobile client 108 may access multiple ad hoc service providers 106 simultaneously. A mobile client 108 with multiple transceivers could potentially access multiple ad hoc service providers 106 simultaneously using a different transceiver for each ad hoc service provider 106. If the same wireless access protocol can be used to access multiple ad hoc service providers 106, then different channels may be used. If the mobile client 108 has only one transceiver available, then it may distribute the time that it spends accessing each ad hoc service provider 106.

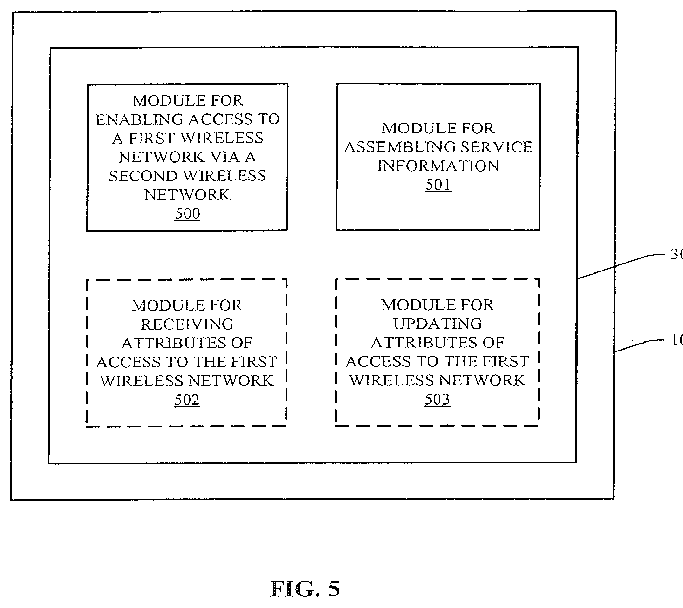

FIG. 5 is a conceptual block diagram of an exemplary configuration of an ad hoc service provider. This block diagram illustrates an example of the functionality of a processing system 306 in an ad hoc service provider 106. The ad hoc service provider 106 may be used to enable access by a mobile client to a first wireless network such as a WWAN 104 via a second wireless network, such as a WLAN supported by the ad hoc service provider. The ad hoc service provider may include a module 500 for enabling access to the first wireless network via the second wireless network. The processing system 306 also may include a module 501 for assembling service information for broadcasting to one or more mobile clients. The processing system 306 may include module 502 for receiving attributes of access to the first wireless network from a server and module 503 for updating attributes of access to the first wireless network based on the status of the ad hoc service provider 106.

Those of skill in the art would appreciate that the various illustrative blocks, modules, elements, components, methods, and algorithms described herein may be implemented as electronic hardware, computer software, or combinations of both. To illustrate this interchangeability of hardware and software, various illustrative blocks, modules, elements, components, methods, and algorithms have been described above generally in information of their functionality. Whether such functionality is implemented as hardware or software depends upon the particular application and design constraints imposed on the overall system. Skilled artisans may implement the described functionality in varying ways for each particular application.

It is understood that the specific order or hierarchy of steps in the processes disclosed is an illustration of exemplary approaches. Based upon design preferences, it is understood that the specific order or hierarchy of steps in the processes may be rearranged. The accompanying method claims present elements of the various steps in a sample order, and are not meant to be limited to the specific order or hierarchy presented.

The previous description is provided to enable any person skilled in the art to practice the various aspects described herein. Various modifications to these aspects will be readily apparent to those skilled in the art, and the generic principles defined herein may be applied to other aspects. Thus, the claims are not intended to be limited to the aspects shown herein, but is to be accorded the full scope consistent with the language claims, wherein reference to an element in the singular is not intended to mean "one and only one" unless specifically so stated, but rather "one or more." Unless specifically stated otherwise, the term "some" refers to one or more. Pronouns in the masculine (e.g., his) include the feminine and neuter gender (e.g., her and its) and vice versa. All structural and functional equivalents to the elements of the various aspects described throughout this disclosure that are known or later come to be known to those of ordinary skill in the art are intended to be encompassed by the claims.

## Claims

1. A mobile ad hoc service provider, comprising:
means (500) for enabling access by one or more mobile clients (108) to a first wireless network (202) via a second wireless network (204); and
means (501) for assembling service information for broadcasting to one or more mobile clients,
wherein the service information comprises attributes of access to the first wireless network, the access being offered by the mobile ad hoc service provider to the one or more mobile clients.

2. The mobile ad hoc service provider of claim 1, wherein the mobile ad hoc service provider further comprises means (502) for receiving at least one attribute of access to the first wireless network from a server.

3. The mobile ad hoc service provider of claim 1, wherein the mobile ad hoc service provider further comprises means for (503) dynamically updating at least one attribute of access to the first wireless network based on a status of the mobile ad hoc service provider.

4. The mobile ad hoc service provider of claim 1, wherein the attributes of access to the first wireless network comprise at least one of a quality of service parameter and a fee rate of access to the first wireless network, and
wherein the quality of service parameter comprises at least one of an expected data rate of access to the first wireless network, an expected duration of access to the first wireless network, a latency of access to the first wireless network, a frequency of access to the first wireless network, and an amount of transferred data.

5. The mobile ad hoc service provider of claim 1, wherein the attributes of access to the first wireless network comprise a service provider goodness metric based on prior access to the first wireless network provided by the mobile ad hoc service provider to one or more mobile clients.

6. The mobile ad hoc service provider of claim 1, wherein the means (501) for assembling service information further constructs a beacon frame suitable for broadcasting to one or more mobile clients, the beacon frame comprising the service information.

7. The mobile ad hoc service provider of claim 1, wherein the service information further comprises parameters of access to the second wireless network comprising a service set identifier,
wherein the means for assembling service information further incorporates at least one attribute of access to the first wireless network into the service set identifier.

8. The mobile ad hoc service provider of claim 1, further comprising means for broadcasting the assembled service information to one or more mobile clients.

9. A method of providing service information by a mobile ad hoc service provider (106) configured to enable access by one or more mobile clients (108) to a first wireless network (202) via a second wireless network (204), the method comprising:
assembling (402) service information for broadcasting to one or more mobile clients,
wherein the service information comprises attributes of access to the first wireless network, the access being offered by the ad hoc service provider to one or more mobile clients.

10. The method of claim 9, further comprising receiving (400) at least one attribute of access to the first wireless network from a server.

11. The method of claim 9, further comprising dynamically updating (401) at least one attribute of access to the first wireless network based on a status of the mobile ad hoc service provider.

12. The method of claim 9, wherein the attributes of access to the first wireless network comprise at least one of a quality of service parameter and a fee rate of access to the first wireless network, and
wherein the quality of service parameter comprises at least one of an expected data rate of access to the first wireless network, an expected duration of access to the first wireless network, a latency of access to the first wireless network, a frequency of access to the first wireless network, and an amount of transferred data.

13. The method of claim 9, wherein the attributes of access to the first wireless network comprise a service provider goodness metric based on prior access to the first wireless network provided by the mobile ad hoc service provider to one or more mobile clients.

14. The method of claim 9, wherein the assembling step further comprises constructing a beacon frame suitable for broadcasting to one or more mobile clients, the beacon frame comprising the service information.

15. The method of claim 9, wherein the service information further comprises parameters of access to the second wireless network comprising a service set identifier,
wherein the assembling step further comprises incorporating at least one attribute of access to the first wireless network into the service set identifier.

16. The method of claim 9, further comprising broadcasting (403) the assembled service information to one or more mobile clients.

17. A machine-readable medium comprising instructions executable by a processing system in a mobile ad hoc service provider (106), the instructions comprising code for:
enabling access by one or more mobile clients (108) to a first wireless network (202) via a second wireless network (204); and
assembling service information for broadcasting to one or more mobile clients,
wherein the service information comprises attributes of access to the first wireless network, the access being offered by the mobile ad hoc service provider to one or more mobile clients.

## Patentansprüche

1. Ein mobiler Ad-hoc-Dienstanbieter, umfassend:
Mittel (500) zum Ermöglichen eines Zugriffs von einem oder mehreren mobilen Clients (108) auf ein erstes drahtloses Netzwerk (202) über ein zweites drahtloses Netzwerk (204); und
Mittel (501) zum Zusammenfügen von Dienstinformationen zum Übertragen an einen oder mehrere mobile Clients,
wobei die Dienstinformationen Zugriffsattribute auf das erste drahtlose Netzwerk umfassen und der Zugriff von dem mobilen Ad-hoc-Dienstanbieter dem einen oder mehreren mobilen Clients bereitgestellt wird.

2. Der mobile Ad-hoc-Dienstanbieter gemäß Anspruch 1, wobei der mobile Ad-hoc-Dienstanbieter weiterhin Mittel (502) zum Empfangen mindestens eines Zugriffsattributes auf das erste drahtlose Netzwerk von einem Server umfasst.

3. Der mobile Ad-hoc-Dienstanbieter gemäß Anspruch 1, wobei der mobile Ad-hoc-Dienstanbieter weiterhin Mittel zum (503) dynamischen Updaten mindestens eines Zugriffsattributes auf das erste drahtlose Netzwerk basierend auf einem Status des mobilen Ad-hoc-Dienstanbieters umfasst.

4. Der mobile Ad-hoc-Dienstanbieter gemäß Anspruch 1, wobei die Zugriffsattribute auf das erste drahtlose Netzwerk mindestens einen Dienstqualitätsparameter und/oder eine Gebührenrate des Zugriffs auf das erste drahtlose Netzwerk umfassen, und
wobei der Dienstqualitätsparameter mindestens eines von einer zu erwartenden Datenrate des Zugriffs auf das erste drahtlose Netzwerk, eine zu erwartende Dauer für den Zugriff auf das erste drahtlose Netzwerk, eine Latenz für den Zugriff auf das erste drahtlose Netzwerk, eine Frequenz für den Zugriff auf das erste drahtlose Netzwerk, und einer Menge an übertragenen Daten umfasst.

5. Der mobile Ad-hoc-Dienstanbieter gemäß Anspruch 1, wobei die Zugriffsattribute auf das erste drahtlose Netzwerk eine Güte-Metrik des Dienstanbieters basierend auf einem vorherigen Zugriff auf das erste drahtlose Netzwerk, welches von dem mobilen Ad-hoc-Dienstanbieter einem oder mehreren mobilen Clients bereitgestellt wird, umfassen.

6. Der mobile Ad-hoc-Dienstanbieter gemäß Anspruch 1, wobei das Mittel (501) zum Zusammenfügen von Dienstinformationen weiterhin einen Beacon-Frame, geeignet zum Übertragen an einen oder mehrere mobile Clients, konstruiert und der Beacon-Frame die Dienstinformationen umfasst.

7. Der mobile Ad-hoc-Dienstanbieter gemäß Anspruch 1, wobei die Dienstinformationen weiterhin Zugriffsparameter auf das zweite drahtlose Netzwerk umfassen, die einen Service Set Identifier umfassen,
wobei das Mittel zum Zusammenfügen von Dienstinformationen weiterhin mindestens ein Zugriffsattribut auf das erste drahtlose Netzwerk in den Service Set Identifier einbezieht.

8. Der mobile Ad-hoc-Dienstanbieter gemäß Anspruch 1, weiterhin Mittel zum Übertragen der zusammengefügten Dienstinformationen an einen oder mehrere mobile Clients umfassend.

9. Ein Verfahren zum Bereitstellen von Dienstinformationen durch einen mobilen Ad-hoc-Dienstanbieter (106) ausgelegt um Zugriff von einem oder mehreren mobilen Clients (108) auf ein erstes drahtloses Netzwerk (202) über ein zweites drahtloses Netzwerk (204) zu ermöglichen, umfassend:
Zusammenfügen (402) von Dienstinformationen zum Übertragen an einen oder mehrere mobile Clients,
wobei die Dienstinformationen Zugriffsattribute auf das erste drahtlose Netzwerk umfassen und der Zugriff von dem mobilen Ad-hoc-Dienstanbieter einem oder mehreren mobilen Clients bereitgestellt wird.

10. Das Verfahren gemäß Anspruch 9, weiterhin das Empfangen (400) mindestens eines Zugriffsattributes auf das erste drahtlose Netzwerk von einem Server umfassend.

11. Das Verfahren gemäß Anspruch 9, weiterhin das dynamische Updaten (401) mindestens eines Zugriffsattributes auf das erste drahtlose Netzwerk basierend auf einem Status des mobilen Ad-hoc-Dienstanbieters umfassend.

12. Das Verfahren gemäß Anspruch 9, wobei die Zugriffsattribute auf das erste drahtlose Netzwerk mindestens einen Dienstqualitätsparameter und/oder eine Gebührenrate des Zugriffs auf das erste drahtlose Netzwerk umfassen, und
wobei der Dienstqualitätsparameter mindestens eines von einer zu erwartenden Datenrate des Zugriffs auf das erste drahtlose Netzwerk, eine zu erwartende Dauer für den Zugriff auf das erste drahtlose Netzwerk, eine Latenz für den Zugriff auf das erste drahtlose Netzwerk, eine Frequenz für den Zugriff auf das erste drahtlose Netzwerk, und einer Menge an übertragenen Daten umfasst.

13. Das Verfahren gemäß Anspruch 9, wobei die Zugriffsattribute auf das erste drahtlose Netzwerk eine Güte-Metrik des Dienstanbieters basierend auf einem vorherigen Zugriff auf das erste drahtlose Netzwerk, welches von dem mobilen Ad-hoc-Dienstanbieter einem oder mehreren mobilen Clients bereitgestellt wird, umfassen.

14. Das Verfahren gemäß Anspruch 9, wobei der Schritt des Zusammenfügens weiterhin das Konstruieren eines Beacon-Frames, geeignet zum Übertragen an einen oder mehrere mobile Clients, umfasst und der Beacon-Frame die Dienstinformationen umfasst.

15. Das Verfahren gemäß Anspruch 9, wobei die Dienstinformationen weiterhin Zugriffsparameter auf das zweite drahtlose Netzwerk umfassen, die einen Service Set Identifier umfassen,
wobei der Schritt des Zusammenfügens weiterhin mindestens ein Zugriffsattribut auf das erste drahtlose Netzwerk in den Service Set Identifier einbezieht.

16. Das Verfahren gemäß Anspruch 9, weiterhin umfassend das Übertragen (403) der zusammengefügten Dienstinformationen an einen oder mehrere mobile Clients.

17. Ein maschinenlesbares Medium, das Instruktionen aufweist, die von einem Verarbeitungssystem in einem mobilen Ad-hoc-Dienstanbieter (106) ausführbar sind und die Instruktionen Code umfassen zum:
Ermöglichen eines Zugriffs von einem oder mehreren mobilen Clients (108) auf ein erstes drahtloses Netzwerk (202) über ein zweites drahtloses Netzwerk (204); und
Zusammenfügen von Dienstinformationen zum Übertragen an einen oder mehrere mobile Clients,
wobei die Dienstinformationen Zugriffsattribute auf das erste drahtlose Netzwerk umfassen und der Zugriff von dem mobilen Ad-hoc-Dienstanbieter einem oder mehreren mobilen Clients bereitgestellt wird.

## Revendications

1. Fournisseur de services ad hoc mobile, comprenant :
des moyens (500) pour permettre l'accès par un ou plusieurs clients mobiles (108) à un premier réseau sans fil (202) via un second réseau sans fil (204) ; et
des moyens (501) pour assembler des informations de service pour diffusion vers un ou plusieurs clients mobiles,
dans lequel les informations de service comprennent les attributs d'accès au premier réseau sans fil, l'accès étant offert par le fournisseur de services ad hoc mobile au(x) client(s) mobile(s).

2. Fournisseur de services ad hoc mobile selon la revendication 1, dans lequel le fournisseur de services ad hoc mobile comprend en outre des moyens (502) pour recevoir au moins un attribut d'accès au premier réseau sans fil en provenance d'un serveur.

3. Fournisseur de services ad hoc mobile selon la revendication 1, dans lequel le fournisseur de services ad hoc mobile comprend en outre des moyens pour (503) mettre à jour de manière dynamique au moins un attribut d'accès au premier réseau sans fil sur la base d'un état du fournisseur de services ad hoc mobile.

4. Fournisseur de service ad hoc mobile selon la revendication 1, dans lequel les attributs d'accès au premier réseau sans fil comprennent au moins l'un d'un paramètre de qualité de service et d'un frais d'accès au premier réseau sans fil, et
dans lequel le paramètre de qualité de service comprend au moins l'un d'un débit binaire d'accès prévu au premier réseau sans fil, d'une durée d'accès prévue au premier réseau sans fil, d'un temps d'attente d'accès au premier réseau sans fil, d'une fréquence d'accès au premier réseau sans fil et d'une quantité de données transférées.

5. Fournisseur de service ad hoc mobile selon la revendication 1, dans lequel les attributs d'accès au premier réseau sans fil comprennent une mesure de qualité du fournisseur de services sur la base d'un accès antérieur au premier réseau sans fil fourni par le fournisseur de services ad hoc mobile à un ou plusieurs clients mobiles.

6. Fournisseur de service ad hoc mobile selon la revendication 1, dans lequel les moyens (501) pour assembler les informations de service construisent une trame balise adaptée à la diffusion vers un ou plusieurs clients mobiles, la trame balise comprenant les informations de service.

7. Fournisseur de service ad hoc mobile selon la revendication 1, dans lequel les informations de service comprennent en outre des paramètres d'accès au second réseau sans fil comprenant un identifiant d'ensemble de services,
dans lequel les moyens pour assembler les informations de service intègrent en outre au moins un attribut d'accès au premier réseau sans fil dans l'identifiant d'ensemble de services.

8. Fournisseur de service ad hoc mobile selon la revendication 1, comprenant en outre des moyens pour diffuser les informations de service assemblées vers un ou plusieurs clients mobiles.

9. Procédé de fourniture d'informations de service au moyen d'un fournisseur de services ad hoc mobile (106) configuré pour permettre l'accès au moyen d'un ou plusieurs clients mobiles (108) à un premier réseau sans fil (202) via un second réseau sans fil (204), le procédé comprenant :
l'assemblage (402) d'informations de service pour diffusion vers un ou plusieurs clients mobiles,
dans lequel les informations de service comprennent les attributs d'accès au premier réseau sans fil, l'accès étant offert par le fournisseur de services ad hoc mobile au(x) client(s) mobile(s).

10. Procédé selon la revendication 9, comprenant en outre la réception (400) d'au moins un attribut d'accès au premier réseau sans fil en provenance d'un serveur.

11. Procédé selon la revendication 9, comprenant en outre la mise à jour dynamique (401) d'au moins un attribut d'accès au premier réseau sans fil sur la base d'un état du fournisseur de services ad hoc mobile.

12. Procédé selon la revendication 9, dans lequel les attributs d'accès au premier réseau sans fil comprennent au moins l'un d'un paramètre de qualité de service et d'un frais d'accès au premier réseau sans fil, et
dans lequel le paramètre de qualité de service comprend au moins l'un d'un débit binaire d'accès prévu au premier réseau sans fil, d'une durée d'accès prévue au premier réseau sans fil, d'un temps d'attente d'accès au premier réseau sans fil, d'une fréquence d'accès au premier réseau sans fil et d'une quantité de données transférées.

13. Procédé selon la revendication 9, dans lequel les attributs d'accès au premier réseau sans fil comprennent une mesure de qualité du fournisseur de services sur la base d'un accès antérieur au premier réseau sans fil fourni par le fournisseur de services ad hoc mobile à un ou plusieurs clients mobiles.

14. Procédé selon la revendication 9, dans lequel l'étape d'assemblage comprend en outre la construction d'une trame balise adaptée à la diffusion vers un ou plusieurs clients mobiles, la trame balise comprenant les informations de service.

15. Procédé selon la revendication 9, dans lequel les informations de service comprennent en outre des paramètres d'accès au second réseau sans fil comprenant un identifiant d'ensemble de services,
dans lequel l'étape d'assemblage comprend en outre l'intégration d'au moins un attribut d'accès au premier réseau sans fil dans l'identifiant d'ensemble de services.

16. Procédé selon la revendication 9, comprenant en outre la diffusion (403) des informations de service assemblées vers un ou plusieurs clients mobiles.

17. Support lisible par machine comprenant des instructions exécutables par un système de traitement dans un fournisseur de services ad hoc mobile (106), les instructions comprenant un code pour :
permettre l'accès au moyen d'un ou plusieurs clients mobiles (108) à un premier réseau sans fil (202) via un second réseau sans fil (204) ; et
assembler des informations de service pour diffusion à un ou plusieurs clients mobiles,
dans lequel les informations de service comprennent les attributs d'accès au premier réseau sans fil, l'accès étant offert par le fournisseur de services ad hoc mobile à un ou plusieurs clients mobiles.
